(19) **Europäisches Patentamt / European Patent Office / Office européen des brevets**

(11) **EP 3 043 624 B1**

(12) **EUROPEAN PATENT SPECIFICATION**

(45) Date of publication and mention
of the grant of the patent:
**06.12.2017 Bulletin 2017/49**

(51) Int Cl.:
***H02J 9/00*** *(2006.01)* ***H05B 33/08*** *(2006.01)*

(21) Application number: **15150633.4**

(22) Date of filing: **09.01.2015**

(54) **LED DRIVER WITH STANDBY MODE, AND METHOD FOR UTILIZING STANDBY MODE IN A LED DRIVER**

LED-TREIBER MIT STANDBY-MODUS UND VERFAHREN ZUR VERWENDUNG DES STANDBY-MODUS IN EINEM LED-TREIBER

CIRCUIT D'ATTAQUE DE DEL AVEC MODE EN VEILLE ET PROCÉDÉ POUR UTILISER CE MODE VEILLE DANS UN TEL CIRCUIT D'ATTAQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.07.2016 Bulletin 2016/28**

(73) Proprietor: **Helvar Oy Ab**
**02150 Espoo (FI)**

(72) Inventors:
• **Perkiö, Tuomas**
**02150 ESPOO (FI)**
• **Naakka, Harri**
**02150 ESPOO (FI)**

(74) Representative: **Berggren Oy, Helsinki & Oulu P.O. Box 16**
**Eteläinen Rautatiekatu 10A**
**00101 Helsinki (FI)**

(56) References cited:
**US-A1- 2014 043 866      US-A1- 2014 346 874**

**Description**

**FIELD OF THE INVENTION**

The invention concerns the field of driver devices for semiconductor light-emitting devices that can be set into standby mode. Particularly the invention concerns the task of ensuring low power consumption during standby mode while avoiding disadvantageous effects such as unintended glowing of the semiconductor light-emitting devices.

**BACKGROUND**

This description uses the acronym LED (Light-Emitting Diode) to refer to all kinds of semiconductor light-emitting devices that are or can be driven with pulsating electric current. Non-limiting examples of LEDs are white LEDs, coloured LEDs, ultraviolet LEDs, infrared LEDs, laser diodes, and polychromatic LEDs.

A driver device for LEDs, also called a LED driver for short, is an electronic device that makes an appropriate electric current flow through the LEDs to make them produce the desired amount of light. Controllable LED drivers may be set into standby mode, in which they are ready to switch on the lights but keep them extinguished for the moment. The controllable LED driver comprises a processor and a control interface, through which controlling commands can be sent to the processor. When the processor receives a command to enter standby mode, or when it otherwise detects conditions that should trigger standby mode, the processor must take care that the electric current through the LEDs is interrupted but sufficient internal processes are kept running in the LED driver so that normal operation can be quickly resumed.

The driver device should consume as little power as possible during standby mode. It should also ensure that not even residual current flows through the LEDs, because particularly in an otherwise dark environment even relatively small currents may cause the LEDs to glow, which may be annoying or even highly disadvantageous for example if the LED luminaire is placed in a room where photosensitive materials are handled.

A prior art document WO2013/014607 discloses a LED driver that is internally divided into a primary side and a secondary side. A half-bridge converter feeds electric power over a main transformer from the primary side to the secondary side. The controlling microprocessor is on the secondary side. When it decides to enter standby mode, it sends a control command over an optoisolator to the primary side, with the effect of shutting off the half-bridge converter. This is certainly effective from the power consumption point of view, but since also the microprocessor receives its operating power from the primary side, there is needed a parallel power supply that keeps supplying power to the secondary side over an additional transformer so that the processor can be kept operational. The structure with two parallel power supplies, each with its own transformer, is complicated and costly to manufacture.

A prior art document US 2014/0346874 A1 discloses a power supply configured to selectively operate in active and standby modes. During standby mode the internal bus voltage of the power supply is reduced, and a switch is used to cut operating power from auxiliary circuits that are not needed in standby mode.

**SUMMARY**

It is an objective of the present invention to provide a driver device for semiconductor light-emitting devices in which standby mode operation consumes little power and ensures no glowing, while simultaneously allowing a simple and reliable circuit architecture that is advantageous from the manufacturing point of view.

The objectives of the invention are reached with a method and driver device as defined by the respective independent claims.

According to an example embodiment, a driver device is provided for providing output current to at least one semiconductor light-emitting device. The driver device comprises:

- a first stage switched-mode power supply configured to produce a bus voltage,

- a second stage switched-mode power supply configured to utilize said bus voltage to produce an output current to be led to said at least one semiconductor light-emitting device,

- a voltage feedback arrangement configured to convey a feedback signal representing said bus voltage to a control circuit of said first stage switched-mode power supply, and

- a controller capable of setting the driver device into a standby mode in which said output current is essentially zero;

wherein said controller is configured to change the way in which said feedback signal represents said bus voltage as a part of setting the driver device into said standby mode, for lowering the bus voltage.

According to another example embodiment, a method is provided for utilizing standby mode in a driver device of semiconductor light-emitting devices. The method comprises:

- producing a bus voltage,

- utilizing said bus voltage to produce an output current for leading to said semiconductor light-emitting devices,

- controlling the production of said bus voltage on the basis of a feedback signal representing said bus voltage, and

- changing the way in which said feedback signal represents said bus voltage as a part of setting the driver device into standby mode.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

## BRIEF DESCRIPTION OF DRAWINGS

Fig. 1 illustrates a driver device for at least one semiconductor light-emitting device,

fig. 2 illustrates a principle of voltage feedback,

fig. 3 illustrates a principle of changing the gain of voltage feedback,

fig. 4 illustrates an exemplary way of implementing the principle of fig. 3,

fig. 5 illustrates parts of a voltage feedback arrangement and a voltage regulator arrangement,

fig. 6 illustrates an auxiliary coupling and its use for output voltage measurement,

fig. 7 illustrates a method for utilizing standby mode in a driver device of semiconductor light-emitting devices,

fig. 8 illustrates a second stage switched-mode power supply, and

fig. 9 illustrates a second stage switched-mode power supply.

## DETAILED DESCRIPTION OF EMBODIMENTS OF THE INVENTION

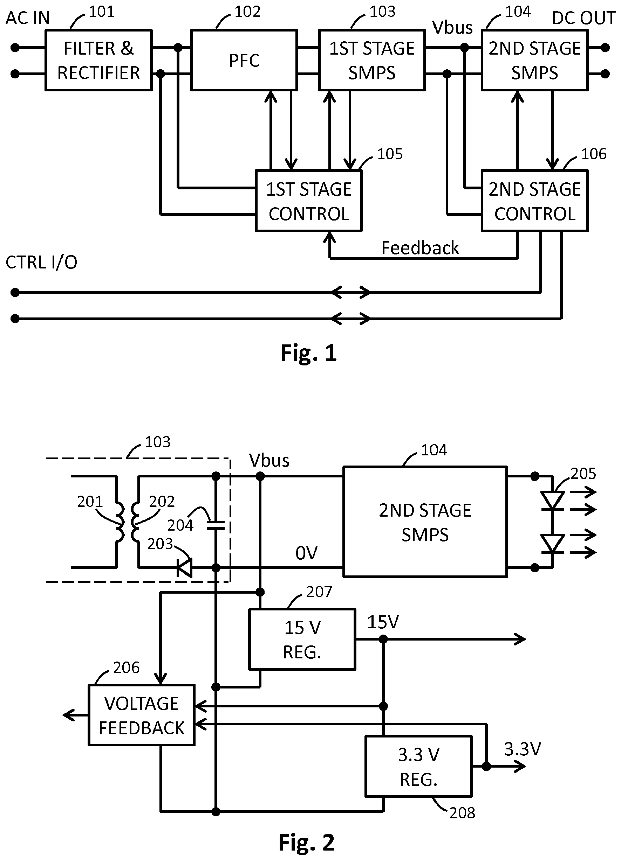

Fig. 1 illustrates schematically a driver device for at least one semiconductor light-emitting device, where for the last-mentioned the general designation LED can be used for short. AC operating power is coupled to a filter and rectifier block 101, from which the filtered and rectified operating power goes to a power factor correction (PFC) block 102. After power factor correction comes the so-called first stage switched-mode power supply 103, which may have the topology of for example a half-bridge converter or a flyback converter. It produces the so-called bus voltage, which is an internal DC voltage of the driver device. In some cases the PFC block 102 and the first stage switched-mode power supply 103 are the same, meaning that the power factor correction and the production of the bus voltage are interrelated functionalities of a single functional block.

The bus voltage goes to a second stage switched-mode power supply 104 that is configured to utilize the bus voltage to produce an output current to be led to the at least one semiconductor light-emitting device. The last-mentioned is to be coupled to the output nodes on the right in fig. 1, labeled DC OUT.

For controlling the operation of the blocks mentioned above, the driver device comprises a first stage control block 105 and a second stage control block 106. In particular, the first stage control block 105 controls the duty cycle and/or switching frequency of the first stage switched-mode power supply 103, with the aim of ensuring that an appropriate (not too large, not too small) amount of electric energy is made available to the second stage switched-mode power supply 104. A feedback arrangement between the control blocks enables using measurements obtained in or about the second stage as a basis of controlling the first stage. If galvanic isolation is required, the transfer of electric energy from the first stage to the second stage involves a transformer, and the feedback arrangement involves an optocoupler or some corresponding component capable of conveying information without galvanic connection. In such case the galvanic isolation line divides the driver device into a primary side and a secondary side, which approximately correspond to the designations first stage and second stage (with the exception that some parts of the first stage SMPS appear on the secondary side).

Fig. 1 shows a control input and output interface CTRL I/O, through which the second stage control block 106 may exchange information with a centralized lighting controller or other device through a lighting control bus such as a DALI (Digital Addressable Lighting Interface) bus. Additionally or alternatively the control input and output interface may represent a wireless transceiver, a sensor or set of sensors, or some other kind of connection through which the driver device may e.g. receive commands and other information concerning the desired use of the LEDs. A control input and output interface of this kind has significance, because through it the driver device may receive an explicit command to go into standby mode, or it may receive other information that - without being an explicit command - fulfils the conditions that should trigger standby mode.

A particular form of feedback is voltage feedback, an example of which is illustrated schematically in fig. 2. Voltage feedback in general means that a produced voltage (or a further quantity derived therefrom) is monitored, and a feedback signal is provided to the circuit responsible of producing said voltage, said signal representing the produced voltage in a predefined way. If the purpose of the feedback is to maintain the produced voltage at a predefined value, the feedback signal may have e.g. a magnitude proportional to the difference between the momentary measured value and the predefined value, according to a formula of the type

$$FB = k\left(V_{meas} - V_{predef}\right)^{a} \qquad (1)$$

where $FB$ is a magnitude of the feedback signal, $k$ is a proportionality constant also known as the feedback gain, $V_{meas}$ is the momentary measured voltage value, $V_{predef}$ is the predefined voltage value, and $a$ is a constant. If the feedback signal is linearly dependent of the measured voltage value, it may obey a formula of the type

$$FB = kV_{meas} + b \qquad (2)$$

in which $k$ is again a proportionality constant and $b$ is a constant. The formulas (1) and (2) are equal, if $a = 1$ and $b = -kV_{predef}$. Yet another example of a voltage feedback signal is a step function

$$FB = \begin{cases} a, when\ V_{meas} \leq V_{limit} \\ b, when\ V_{meas} > V_{limit} \end{cases} \qquad (3)$$

where $a$ and $b$ are constants (typically $a = 0$) and $V_{limit}$ is an upper limit voltage, which the measured voltage is not allowed to exceed.

Fig. 2 illustrates a primary coil 201, a secondary coil 202, a diode 203, and a capacitor 204, which are all part of a first stage SMPS 103 and of which the three last-mentioned are on the secondary side. The first stage SMPS is configured to produce a bus voltage Vbus. A second stage SMPS 104 is configured to utilize the bus voltage Vbus to produce an output current to be led to at least one semiconductor light-emitting device 205. Fig. 2 also illustrates a voltage feedback arrangement 206, which is configured to convey a feedback signal representing the bus voltage Vbus to a control circuit (not shown) of the first stage SMPS 103.

Fig. 2 also assumes that some circuits on the secondary side of the driver device may need other voltages than just the bus voltage Vbus. Therefore the driver device comprises, on its secondary side, a voltage regulator arrangement for converting the bus voltage into at least one lower voltage. In particular the voltage regulator arrangement of fig. 2 comprises a first voltage regulator 207 for converting the bus voltage Vbus into a first lower voltage, called that because it is lower than the bus voltage. In fig. 2 the first lower voltage is 15 volts. The voltage regulator arrangement comprises also a second voltage regulator 208 for converting the first lower voltage further into a second lower voltage that is lower than said first lower voltage. In fig. 2 the second lower voltage is 3.3 volts. All voltages (Vbus, 15 V and 3.3 V) in fig. 2 are given as potential differences to the 0 V line that is the other output pole of the first stage SMPS 103 and constitutes a common reference potential on the secondary side of the driver device. Fig. 2 shows how there may be couplings from all voltages produced from Vbus, including Vbus itself, to the voltage feedback arrangement 206. Thus the feedback signal FB may be a function of all voltages:

$$FB = F_1(Vbus) + F_2(V_{15}) + F_3(V_{3.3}) \qquad (4)$$

where the notation $F_i(x)$ means some component function $F$ of the argument $x$ in each of the cases $i$ = (1,2,3). The lower voltages $V_{15}$ and $V_{3.3}$ may be obtained as functions $G_i(X)$ of the higher voltages like

$$\begin{aligned} V_{3.3} &= G_1(V_{15}) \\ V_{15} &= G_2(Vbus) \end{aligned} \qquad (5)$$

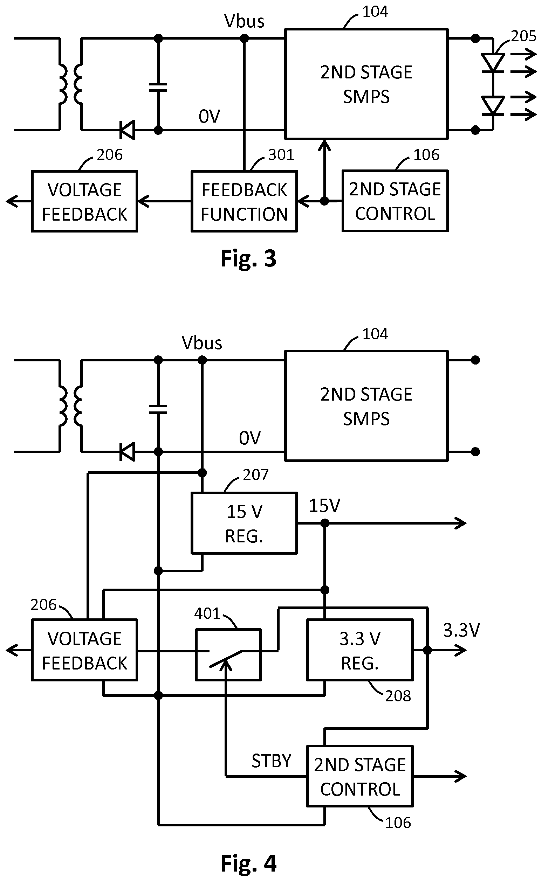

Fig. 3 shows how the driver device may comprise a controller capable of setting the driver device into a standby (STBY) mode, in which the output current of the driver device is essentially zero. Although not a necessary requirement, it is natural to assume that the controller is the second stage control block 106 as illustrated in fig. 1. As a part of setting the driver device into standby mode the controller 106 is configured to change the way in which the feedback signal represents the bus voltage Vbus. This is shown schematically in fig. 3 by having a feedback function block 301 between the bus voltage Vbus and the voltage feedback arrangement 206.

Since the output current of the driver device is essentially zero in standby mode, the only consumers of electric energy on the secondary side during standby mode are those circuits that should remain active for maintaining the capability of resuming normal mode when that becomes actual. If the driver device has the general architecture of fig. 1, this means mainly the second stage control block 106, which typically comprises a microcontroller that feeds on one of the lower voltages. If the voltage regulator arrangement on the secondary side has the general architecture of fig. 2, it is possible that only the second voltage regulator 208 and its 3.3 V output voltage are actually needed.

For structural simplicity it is common to produce the lower voltages on the secondary side with linear regulators, so at least one of the first 207 and second 208 voltage regulator in fig. 2 may be a linear regulator. Many linear regulators have the inherent characteristic that their own energy dissipation is proportional to the difference between their input and output voltages, and similar considerations may apply to other regulator solutions as well. Since the normal value of the Vbus voltage is not needed in the second stage SMPS 104 during standby mode, it is advantageous to lower the Vbus voltage during standby mode so that any dissipation of energy in linear regulators of the voltage regulation arrangement decreases. Thus as a part of setting the driver device into standby mode the controller 106 is in particular configured to change the way in which the feedback signal represents the bus voltage Vbus so that as a result the bus voltage Vbus is lowered.

Fig. 4 illustrates one example of how the way in which the feedback signal represents the bus voltage Vbus can be changed with relatively simple circuit elements with very little additional circuitry. A coupling exists from the bus voltage Vbus to the voltage feedback arrangement 206. The voltage regulator arrangement comprises a first voltage regulator 207 for converting the bus voltage Vbus into a first lower voltage, here 15 V. The voltage regulator arrangement comprises also a second voltage regulator 208 for converting the first lower voltage into a second lower voltage, here 3.3 V. This second lower voltage is used for example as the operating voltage of the second stage control block 106.

For changing the way in which the feedback signal represents the bus voltage Vbus the second stage control block 106 is configured to change the conductivity of a coupling between the second lower voltage and the voltage feedback arrangement 206. Fig. 4 shows schematically a controllable switch 401 that the second stage control block 106 controls with a standby (STBY) signal. Activating the standby signal operates the switch 401, thus either providing the voltage feedback arrangement 206 with some of the second lower (3.3 V) voltage or excluding it, depending on the polarity of the switch 401.

If the feedback signal is produced in the voltage feedback arrangement 206 according to formula (1) above, changing the way in which the feedback signal represents the bus voltage Vbus may involve changing the predefined voltage value $V_{predef}$. If an approach according to formula (2) above is in use, changing the way in which the feedback signal represents the bus voltage Vbus may involve changing the value of the proportionality constant $k$ and/or changing the value of the constant $b$. If an approach according to formula (3) above is in use, changing the way in which the feedback signal represents the bus voltage Vbus may involve changing the upper limit voltage $V_{limit}$. In general, if the feedback signal is formed as a function of two or more voltages on the secondary side according to formula (4) above, changing the way in which the feedback signal represents the bus voltage Vbus may involve changes in any of the component functions.

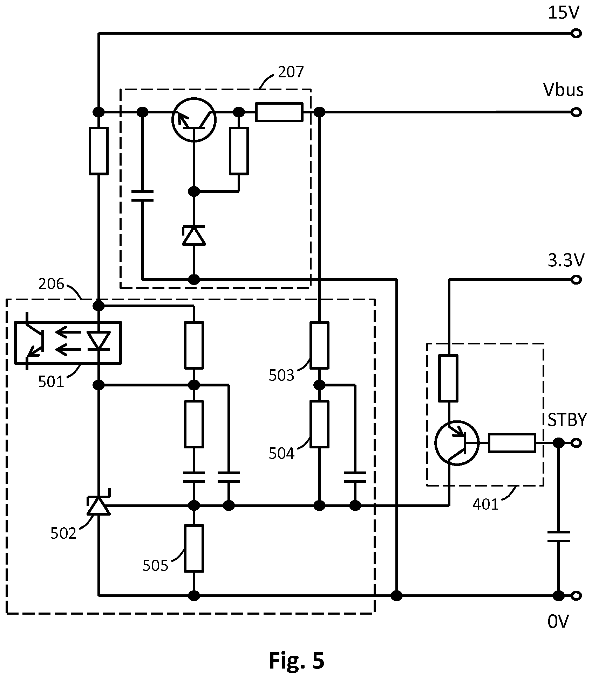

Fig. 5 illustrates one example of how the principle of figs. 3 and 4 can be implemented in practice. The voltage feedback arrangement 206 comprises an optocoupler 501 with a photodiode that has an anode and a cathode. A coupling exists (through a resistor) between the first lower (15 V) voltage produced by the first voltage regulator 207 and the anode of said photodiode. The voltage feedback arrangement comprises a shunt regulator 502 coupled to the cathode of the photodiode, and a basic reference voltage coupling from the bus voltage Vbus through resistors 503 and 504 to a control input of the shunt regulator 502. Resistor 505 complements the voltage divider that brings a scaled sample of the bus voltage Vbus to the control input of the shunt regulator 502.

During normal operation the scaled sample of the bus voltage Vbus controls the shunt regulator 502 so that the higher the bus voltage Vbus becomes, the more current is drawn through the photodiode in the optocoupler 501, and consequently the more photons the photodiode emits inside the optocoupler. Correspondingly if the bus voltage Vbus would tend to drop too low, the scaled sample thereof would also decrease, decreasing the current through the photodiode and making it shine dimmer. The feedback scheme is basically formed according to formula (2) above, with a positive value of the proportionality constant k.

The controller (which is not shown in fig. 5 but is supposed to be capable of producing a standby signal STBY) is configured to implement the change of the way in which the feedback signal represents the bus voltage Vbus by changing the conductivity of a coupling between the second lower (3.3 V) voltage and the control input of the shunt regulator 502. In particular, a simple transistor circuit acts as a switch 401. The polarity of the standby signal STBY is such that when activated (i.e. when the standby signal STBY signifies that the driver device should be in standby state) it is low, making the transistor conductive in the switch 401 and allowing some current to flow from the second lower (3.3 V) voltage to the control input of the shunt regulator 502. This causes an overall increase to the electric potential of the control input, which in formula (2) would represent making the value of the parameter *b* larger.

In an alternative implementation one could bring an inverted scaled sample of the bus voltage Vbus to the control input of the shunt regulator 502, or change the polarity of the photodiode in the optocoupler (while simultaneously changing the scaling made in the voltage divider 503-504-505), so that as a result the photodiode in the optocoupler 501 would shine dimmer in response to the bus voltage Vbus becoming higher during normal operation. In such case also the use of the coupling between the second lower (3.3 V) voltage and the control input of the shunt regulator 502 should be redesigned so that activating the standby signal STBY would lower the potential of the control input even more, again causing the value of the bus voltage Vbus to be lowered for the duration of the standby state. Naturally also the primary side, to which the optocoupler 501 conveys the feedback signal, should in such case be designed so that it would react to a fading feedback signal by reducing the amount of electric energy transferred to the secondary side, and not the other way round as is expected in the solution of fig. 5.

Changing the way in which the feedback signal represents the bus voltage may have a further advantageous effect on the energy consumption of the driver device. The first stage control block 105 may comprise a FAN6921 controller circuit by Fairchild Semiconductor Corporation, or some other corresponding controller circuit that includes a low power function such as a burst mode function. A controller circuit of this kind is capable of recognizing conditions where only a very small amount of electric energy needs to be transferred to the second stage, and entering e.g. a burst mode in which switching pulses are given to the main current switch of the first stage SMPS in bursts. However, if the way in which the feedback signal represents the bus voltage was not changed during standby mode, it could remain at least uncertain, whether the appropriate decision was made by the first stage control block. The above-explained practice of changing the way in which the feedback signal represents the bus voltage during standby mode ensures that the feedback signal that is eventually delivered to the first stage is certainly understood there as requesting only a very small amount of electric energy. Thus it ensures that all possible energy-saving practices are employed also in the first stage during standby mode, without having to explicitly convey a standby mode command between the second and first stages.

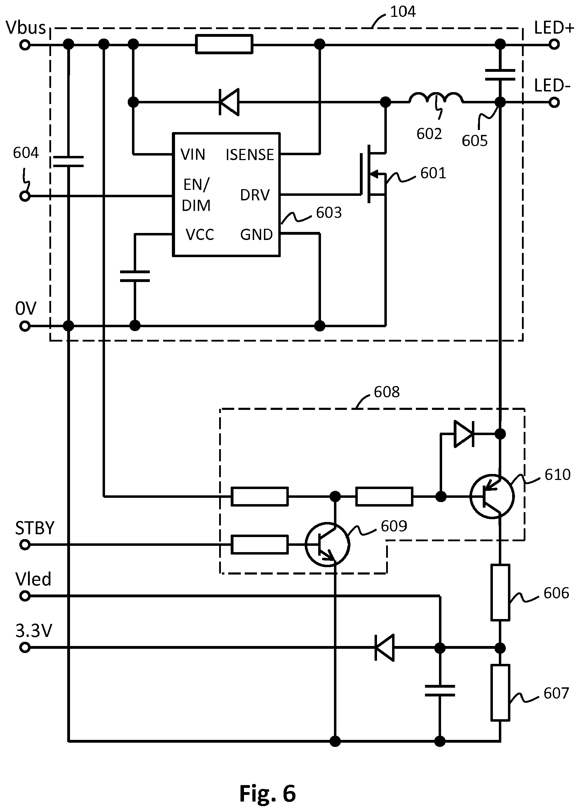

Fig. 6 illustrates how the standby signal STBY produced by the second stage control block can be utilized also in another advantageous way. Fig. 6 shows parts of the output stage of a driver device for at least one LED. The second stage SMPS 104 is a buck converter of the low-side switch type, which means that the main current switch 601 (and here also the coil 602 that acts as the primary storage of electromagnetic energy in the buck converter) is located between the lower output node LED- and the reference potential line 0V. A second stage control block is not separately shown in fig. 6, but it can be assumed to comprise a microcontroller that should be able e.g. to give dimming commands to the buck driver circuit 603 through node 604, and to produce the standby signal STBY.

A second stage control block should also be able to monitor the output voltage of the driver device, i.e. the voltage between the higher and lower output nodes LED+ and LED-. This is not completely straightforward, if the second stage control block uses the 0V line as a reference potential, because of the location of the main current switch 601 and coil 602 between the lower output node LED- and the reference potential line 0V. The circuit of fig. 6 comprises an auxiliary coupling from a point 605 between the lower output node LED- and the main current switch 601 of the buck converter to the reference potential 0V. It enables a voltage measurement at the point 605, by offering a voltage divider 606-607 between point 605 and the reference potential line 0V and a connection from its midpoint to a measurement input Vled of the second stage control block.

During normal operation the second stage control block measures the potential of the Vbus line and the potential of point 605 (through the auxiliary coupling explained above) and calculates the output voltage of the driver device by deducting the latter from the former. In order to keep the LEDs from glowing during standby mode, the second stage control block is configured to decrease the conductivity of said auxiliary coupling as a part of setting the driver device into the standby mode. This is done with the double transistor circuit 608. During normal mode the standby signal STBY is inactive (high), which means that the npn transistor 609 is conductive and keeps the base of the pnp transistor 610 low. Thus also the pnp transistor 610 is conductive and the indirect output voltage measurement described above is enabled. When the standby signal STBY becomes active (low), both transistors in the double transistor circuit 608 become non-conductive, which keeps any stray currents from flowing between the lower output node LED- and the reference potential line 0V, and thus eliminates the possible glowing of the LEDs.

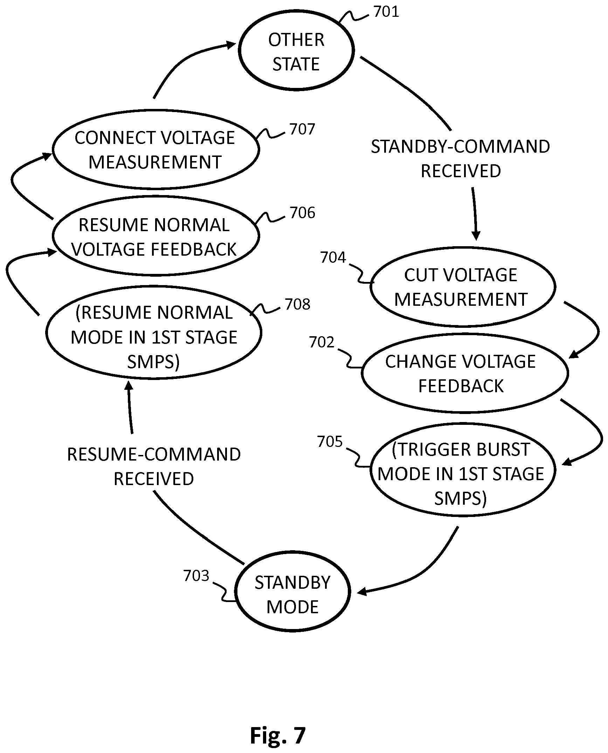

Fig. 7 is a state diagram that illustrates a method for utilizing standby mode in a driver device of semiconductor light-emitting devices. The top oval 701 represents any normal operating state that comprises producing a bus voltage, utilizing said bus voltage to produce an output current for leading to the semiconductor light-emitting devices, and controlling the production of the bus voltage on the basis of a feedback signal representing said bus voltage. Receiving a standby command or otherwise detecting conditions that fulfil the requirements of entering a standby mode causes a series of actions that include changing 702 the way in which the feedback signal represents said bus voltage. Eventually the driver device enters a standby mode 703. Changing the way in which the feedback signal represents the bus voltage at step 702 may comprise changing the conductivity of a coupling between a voltage regulator arrangement and the production of the feedback signal, wherein the voltage regulator arrangement converts said bus voltage into at least one lower voltage.

As illustrated by step 704, setting the driver device into standby mode may comprise decreasing the conductivity of an auxiliary coupling, wherein said auxiliary coupling is used to sample the voltage of a lower output node of a buck converter of the low-side switch type that is used as an output stage of the driver device. It may also comprise directly or indirectly triggering burst mode or corresponding energy-saving measures in the first stage SMPS according to step 705.

If the driver device is in standby mode 703 and receives a command to resume normal operation, or otherwise detects conditions that fulfil the requirements of resuming normal operation, it goes through steps 706, 707, and 708, which essentially reverse the actions made in steps 702, 704, and 705 respectively.

Above it was pointed out that monitoring the output voltage of a buck converter of the low-side switch type may be problematic, because the common reference potential used by the majority of the driver device components (i.e. the 0V line) is separated from the lower output node by at least the switch and typically also the main coil. If a dedicated current path is formed from the lower output node to the common reference potential for the purposes of output voltage monitoring, there is the risk that this current path still conducts some current during standby mode, causing the LEDs to glow. Above in the solution of fig. 6 the risk was eliminated with a switch that responds to a STBY signal by cutting the auxiliary coupling that implemented such a dedicated current path. However, in some cases other solutions may be more preferable.

Output voltage monitoring may be indirectly implemented in a driver device that uses a buck converter of the low-side switch type. This indirect implementation utilizes the fact that the output voltage of a buck converter has an unambiguous relation to the input voltage and duty cycle of the buck converter: the output voltage is the product of the input voltage and duty cycle of the buck converter.

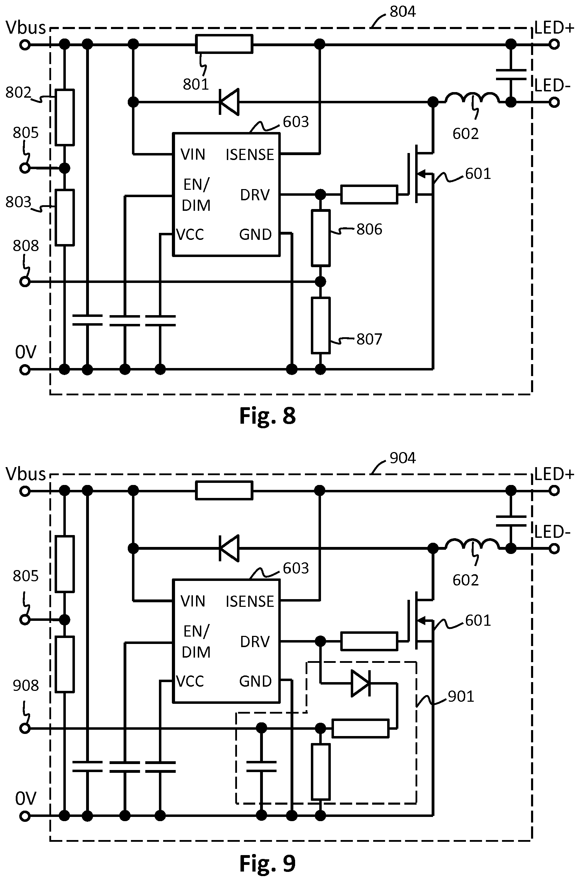

Fig. 8 illustrates a buck converter 804 of the low-side switch type that is used as the second stage SMPS of a driver device for LEDs. The main current switch 601 and the coil 602 are located between the lower output node LED- and the common reference potential 0V. The higher output node LED+ is essentially at the bus voltage Vbus; a possible current-sensing resistor 801 in between does not make an essential difference. Its resistance is small, and the current drawn by the LEDs may be constant or otherwise known, so the voltage drop that occurs across a possible current-sensing resistor 801 can be taken into account in calculations, if needed. A first voltage divider consisting of resistors 802 and 803 is coupled between the Vbus and 0V lines, so a scaled sample of the input voltage to the buck converter can be seen at a connection point 805 in the middle of the first voltage divider. There may be a connection from the connection point 805 to a microcontroller or the like (not shown in fig. 8).

A buck driver circuit 603 has a switching pulse output DRV and is configured to produce the switching pulses to the control electrode of the main current switch 601. In the example of fig. 8 the main current switch 601 is a MOSFET, so the control electrode is its gate. The driver device is here assumed to have been designed to produce a constant output current, so the EN/DIM control input of the buck driver circuit 603 is fixedly coupled to the reference potential line 0V through a capacitor. The buck driver circuit 603 may be for example an MP24894 produced by the Monolithic Power Semiconductor company, or it may be any other driver circuit designed to drive the main current switch in a buck converter of the low-side switch type. If the driver device was designed to produce a variable output current, there could be a coupling to the EN/DIM control input of the buck driver circuit 603 from a PWM output of the microcontroller (not shown) the task of which was to control the output current of the driver device.

There is a coupling between the switching pulse output of the buck driver circuit and the reference potential 0V. In the embodiment of fig. 8 a second voltage divider consisting of resistors 806 and 807 is coupled between that output of the buck driver circuit 603 that provides said switching pulses and the common reference potential 0V. The switching pulses are voltage pulses, and a scaled sample of the momentary voltage at the switching pulse output of the buck driver circuit is seen at the connection point 808 in the middle of the second voltage divider. There may be a connection from the connection point 808 to the same microcontroller or the like (not shown in fig. 8) that also monitors the input voltage Vbus through connection point 805.

The microcontroller is configured to measure an input voltage the buck converter of the low-side switch type, and a voltage formed by the coupling between the switching pulse output of the buck driver circuit and the reference potential. In the embodiment of fig. 8 said microcontroller may be programmed to repeatedly sample the voltage at the connection point 808; since the purpose of such repeated sampling is only to calculate the duty cycle used by the buck driver circuit 603, even a relatively coarse one-bit sampling is sufficient. The sampling rate should be significantly higher than the buck switching frequency, in order to ensure that a sufficient number of samples are taken during each switching cycle. Alternatively it should be ensured that the buck switching frequency is not an integral multiple of the sampling rate.

The controller is programmed to calculate an indication of an output voltage of the buck converter using the measured input voltage and the voltage formed by the coupling between the switching pulse output of the buck driver circuit and the reference potential. In the embodiment of fig. 8 the microcontroller is programmed to calculate the ratio of "high" value samples to the sum of "high" and "low" value samples, which gives the duty cycle of the switching pulses. The microcontroller may be further programmed to calculate the product of the duty cycle so obtained and the scaled sample of the Vbus voltage obtained at the connection point 805, and to use the result of such calculation as an indication of the output voltage of the driver device.

It is possible to loosen the requirements placed to the sampling of the switching pulse voltage by using a filter circuit as the coupling between the switching pulse output of the buck driver circuit 603 and the reference potential 0V. The task of the filter circuit is to produce a voltage level that represents the duty cycle. Fig. 9 illustrates a variation to the circuit of fig. 8, in which the second voltage divider of fig. 8 is replaced with an exemplary filter circuit 901. The functional principle and configuration of the filter circuit may be selected on the basis of criteria such as desirable level of circuit simplicity, acceptable delay in following changes in duty cycle, and the magnitude of filtered voltage that should represent the duty cycle. If a microcontroller is configured to measure the voltages at the connection points 805 and 908 in fig. 9, it may be programmed to use the product of the measured voltage values as an indication of the output voltage of the driver device.

Considering the method of fig. 7, the approach illustrated in figs. 8 and 9 mean that steps 704 and 707 are not needed, but the method may comprise calculating an indication of an output voltage of the buck converter of the low-side switch type that is used as an output stage of the driver device using a measured input voltage of the buck converter and the voltage formed by a coupling between the switching pulse output of a buck driver circuit in the buck converter and a reference potential.

The exemplary embodiments described above do not constitute an exhaustive or limiting description of the scope of protection defined by the appended claims, but variations and modifications are possible. For example, for simplicity the description has only concerned driver devices with one output channel. Multi-channel driver devices may have two or more second stage SMPSs in parallel, all utilizing the same bus voltage but each having its own, individually controllable output current. A multi-channel driver device typically has only one microcontroller acting as the second stage control block. A standby signal activated by such a common microcontroller may change the way in which the common feedback signal represents the common bus voltage, and simultaneously cut an output voltage measurement connection in each channel separately.

**Claims**

1. A driver device for providing current to at least one semiconductor light-emitting device (205), comprising:

> - a first stage switched-mode power supply (103) connected to a control circuit (105) configured to produce a bus voltage (Vbus),
> - a second stage switched-mode power supply (104) configured to utilize said bus voltage to produce an output current for said at least one semiconductor light-emitting device (205), said driver device being **characterised in that** it comprises:
> - a voltage feedback arrangement (206) configured to convey a feedback signal representing said bus voltage (Vbus) to said control circuit (105) of said first stage switched-mode power supply (103), and
> - a controller (106) adapted to set the driver device into a standby mode in which said output current is essentially zero; wherein said controller (106) is configured to change, in said standby mode, the way in which said feedback signal represents said bus voltage (Vbus), for lowering the bus voltage produced by the first stage switched-mode power supply (103).

2. A driver device according to claim 1, comprising:

- a coupling from said bus voltage to said voltage feedback arrangement (206) and
- a voltage regulator arrangement (207, 208) for converting said bus voltage into at least one lower voltage;

wherein said controller (106) is configured to implement said change of the way in which said feedback signal represents said bus voltage by changing the conductivity of a coupling (401) between said voltage regulator arrangement (207, 208) and said voltage feedback arrangement (206).

3. A driver device according to claim 2, wherein:

- said voltage regulator arrangement (207, 208) comprises a first voltage regulator (207) for converting said bus voltage into a first lower voltage that is lower than said bus voltage,
- said voltage regulator arrangement (207, 208) comprises a second voltage regulator (208) for converting said first lower voltage into a second lower voltage that is lower than said first lower voltage, and
- said controller (106) is configured to implement said change of the way in which said feedback signal represents said bus voltage by changing the conductivity of a coupling (401) between said second lower voltage and said voltage feedback arrangement (206).

4. A driver device according to claim 3, wherein at least one of the first (207) and second (208) voltage regulators is a linear regulator.

5. A driver device according to claim 3 or 4, wherein:

- said voltage feedback arrangement (206) comprises an optocoupler (501) with a photodiode that has an anode and a cathode, with a coupling between said first lower voltage and the anode of said photodiode,
- said voltage feedback arrangement (206) comprises a shunt regulator (502) coupled to the cathode of said photodiode,
- said voltage feedback arrangement (206) comprises a basic reference voltage coupling (503, 504) from said bus voltage to a control input of said shunt regulator (502), and
- said controller (106) is configured to implement said change of the way in which said feedback signal represents said bus voltage by changing the conductivity of a coupling (401) between said second lower voltage and said control input of said shunt regulator (502).

6. A driver device according to any of claims 1 to 5, wherein:

- said second stage switched-mode power supply (104) is a buck converter of the low-side switch type,
- the driver device comprises an auxiliary coupling (606, 607, 608) from a point (605) between a lower output node and a current switch (601) of said buck converter to a reference potential, for enabling a voltage measurement at said point (605), and
- said controller (106) is configured, in standby mode, decrease the conductivity of said auxiliary coupling (608).

7. A driver device according to any of claims 1 to 5, wherein:

- said second stage switched-mode power supply (104) is a buck converter of the low-side switch type, with a buck driver circuit (603) having a switching pulse output,
- the driver device comprises a coupling (806, 807) between said switching pulse output of the buck driver circuit (603) and a reference potential,
- said controller (106) is configured to measure an input voltage to said buck converter of the low-side switch type, and a voltage formed by said coupling (806, 807) between the switching pulse output of the buck driver circuit (603) and the reference potential, and
- said controller (106) is programmed to calculate an indication of an output voltage of said buck converter of the low-side switch type using the measured input voltage and the voltage formed by said coupling (806, 807) between the switching pulse output of the buck driver circuit (603) and the reference potential.

8. A method for utilizing standby mode in a driver device of semiconductor light-emitting devices, comprising:

    - producing a bus voltage (Vbus),
    - utilizing said bus voltage to produce an output current for said semiconductor light-emitting devices,

    the method being **characterised by** the following steps:

    - controlling the production of said bus voltage on the basis of a feedback signal representing said bus voltage, and
    - changing (702), in standby mode, the way in which said feedback signal represents said bus voltage.

9. A method according to claim 8, wherein said changing (702) of the way in which said feedback signal represents said bus voltage comprises changing the conductivity of a coupling between a voltage regulator arrangement and the production of said feedback signal, wherein said voltage regulator arrangement converts said bus voltage into at least one lower voltage.

10. A method according to claim 9, comprising:

    - decreasing (704) the conductivity of an auxiliary coupling as a part of setting the driver device into standby mode, wherein said auxiliary coupling is used to sample the voltage of a lower output node of a buck converter of the low-side switch type that is used as an output stage of the driver device.

11. A method according to any of claims 8 or 9, comprising:

    - calculating an indication of an output voltage of a buck converter of the low-side switch type that is used as an output stage of the driver device using a measured input voltage of the buck converter and the voltage formed by a coupling between the switching pulse output of a buck driver circuit in the buck converter and a reference potential.

**Patentansprüche**

1. Treibereinrichtung zum Liefern eines Stroms zu mindestens einer lichtemittierenden Halbleitereinrichtung (205), umfassend:

    - ein Erststufen-Schaltnetzteil (103), das mit einer Steuerschaltung (105) verbunden ist und konfiguriert ist zum Erzeugen einer Busspannung (Vbus),
    - ein Zweitstufen-Schaltnetzteil (104), das konfiguriert ist zum Nutzen der Busspannung, um einen Ausgangsstrom für die mindestens eine lichtemittierende Halbleitereinrichtung (205) zu erzeugen,

    wobei die Treibereinrichtung **dadurch gekennzeichnet ist, dass** sie Folgendes umfasst:

    - eine Spannungsrückkopplungsanordnung (206), die konfiguriert ist zum Übertragen eines Rückkopplungssignals, das die Busspannung (Vbus) repräsentiert, zur Steuerschaltung (105) des Erststufen-Schaltnetzteils (103), und
    - eine Steuerung (106), die dazu ausgelegt ist, die Treibereinrichtung in einen Standby-Modus zu versetzen, in dem der Ausgangsstrom im Wesentlichen null ist;

    wobei die Steuerung (106) konfiguriert ist zum Ändern, im Standby-Modus, der Art und Weise, in der das Rückkopplungssignal die Busspannung (Vbus) repräsentiert, um die durch das Erststufen-Schaltnetzteil (103) erzeugte Busspannung zu senken.

2. Treibereinrichtung nach Anspruch 1, umfassend:

    - eine Kopplung von der Busspannung zur Spannungsrückkopplungsanordnung (206) und
    - eine Spannungsregleranordnung (207, 208) zum Umwandeln der Busspannung in mindestens eine niedrigere Spannung;

    wobei die Steuerung (106) konfiguriert ist zum Implementieren der Änderung der Art und Weise, in der das Rückkopplungssignal die Busspannung repräsentiert, durch Ändern der Leitfähigkeit einer Kopplung (401) zwischen der Spannungsregleranordnung (207, 208) und der Spannungsrückkopplungsanordnung (206).

3.  Treibereinrichtung nach Anspruch 2, wobei:

    - die Spannungsregleranordnung (207, 208) einen ersten Spannungsregler (207) zum Umwandeln der Busspannung in eine erste niedrigere Spannung, die niedriger als die Busspannung ist, umfasst,
    - die Spannungsregleranordnung (207, 208) einen zweiten Spannungsregler (208) zum Umwandeln der ersten niedrigeren Spannung in eine zweite niedrigere Spannung, die niedriger als die erste niedrigere Spannung ist, umfasst, und
    - die Steuerung (106) konfiguriert ist zum Implementieren der Änderung der Art und Weise, in der das Rückkopplungssignal die Busspannung repräsentiert, durch Ändern der Leitfähigkeit einer Kopplung (401) zwischen der zweiten niedrigeren Spannung und der Spannungsrückkopplungsanordnung (206).

4.  Treibereinrichtung nach Anspruch 3, wobei der erste (207) und/oder der zweite (208) Spannungsregler ein Linearregler ist bzw. sind.

5.  Treibereinrichtung nach Anspruch 3 oder 4, wobei:

    - die Spannungsrückkopplungsanordnung (206) einen Optokoppler (501) mit einer Photodiode, die eine Anode und eine Kathode aufweist, umfasst, mit einer Kopplung zwischen der ersten niedrigeren Spannung und der Anode der Photodiode,
    - die Spannungsrückkopplungsanordnung (206) einen Shunt-Regler (502) umfasst, der mit der Kathode der Photodiode gekoppelt ist,
    - die Spannungsrückkopplungsanordnung (206) eine grundlegende Bezugsspannungskopplung (503, 504) von der Busspannung zu einem Steuereingang des Shunt-Reglers (502) umfasst und
    - die Steuerung (106) konfiguriert ist zum Implementieren der Änderung der Art und Weise, in der das Rückkopplungssignal die Busspannung repräsentiert, durch Ändern der Leitfähigkeit einer Kopplung (401) zwischen der zweiten niedrigeren Spannung und dem Steuereingang des Shunt-Reglers (502).

6.  Treibereinrichtung nach einem der Ansprüche 1 bis 5, wobei:

    - das Zweitstufen-Schaltnetzteil (104) ein Abwärtswandler des Low-Side-Schaltertyps ist,
    - die Treibereinrichtung eine Hilfskopplung (606, 607, 608) von einem Punkt (605) zwischen einem niedrigeren Ausgangsknoten und einem Stromschalter (601) des Abwärtswandlers zu einem Bezugspotential umfasst, um eine Spannungsmessung an dem Punkt (605) zu ermöglichen, und
    - die Steuerung (106) konfiguriert ist zum Verringern, im Standby-Modus, der Leitfähigkeit der Hilfskopplung (608).

7.  Treibereinrichtung nach einem der Ansprüche 1 bis 5, wobei:

    - das Zweitstufen-Schaltnetzteil (104) ein Abwärtswandler des Low-Side-Schaltertyps ist, wobei eine Abwärtstreiberschaltung (603) einen Schaltimpulsausgang aufweist,
    - die Treibereinrichtung eine Kopplung (806, 807) zwischen dem Schaltimpulsausgang der Abwärtstreiberschaltung (603) und einem Bezugspotential umfasst,
    - die Steuerung (106) konfiguriert ist zum Messen einer Eingangsspannung zum Abwärtswandler des Low-Side-Schaltertyps und einer Spannung, die durch die Kopplung (806, 807) zwischen dem Schaltimpulsausgang der Abwärtstreiberschaltung (603) und dem Bezugspotential gebildet wird, und
    - die Steuerung (106) programmiert ist zum Berechnen einer Angabe einer Ausgangsspannung des Abwärtswandlers des Low-Side-Schaltertyps unter Verwendung der gemessenen Eingangsspannung und der Spannung, die durch die Kopplung (806, 807) zwischen dem Schaltimpulsausgang der Abwärtstreiberschaltung (603) und dem Bezugspotential gebildet wird.

8.  Verfahren zum Nutzen eines Standby-Modus in einer Treibereinrichtung von lichtemittierenden Halbleitereinrichtungen, umfassend:

    - Erzeugen einer Busspannung (Vbus),
    - Nutzen der Busspannung, um einen Ausgangsstrom für die lichtemittierenden Halbleitereinrichtungen zu erzeugen,

wobei das Verfahren durch die folgenden Schritte gekennzeichnet ist:

- Steuern der Erzeugung der Busspannung auf Basis eines Rückkopplungssignals, das die Busspannung repräsentiert, und
- Ändern (702), im Standby-Modus, der Art und Weise, in der das Rückkopplungssignal die Busspannung repräsentiert.

9. Verfahren nach Anspruch 8, wobei das Ändern (702) der Art und Weise, in der das Rückkopplungssignal die Busspannung repräsentiert, Ändern der Leitfähigkeit einer Kopplung zwischen einer Spannungsregleranordnung und der Erzeugung des Rückkopplungssignals umfasst, wobei die Spannungsregleranordnung die Busspannung in mindestens eine niedrigere Spannung umwandelt.

10. Verfahren nach Anspruch 9, umfassend:

- Verringern (704) der Leitfähigkeit einer Hilfskopplung als ein Teil eines Versetzens der Treibereinrichtung in den Standby-Modus, wobei die Hilfskopplung zum Abtasten der Spannung eines niedrigeren Ausgangsknotens eines Abwärtswandlers des Low-Side-Schaltertyps verwendet wird, der als eine Ausgangsstufe der Treibereinrichtung verwendet wird.

11. Verfahren nach einem der Ansprüche 8 oder 9, umfassend:

- Berechnen einer Angabe einer Ausgangsspannung eines Abwärtswandlers des Low-Side-Schaltertyps, der als eine Ausgangsstufe der Treibereinrichtung verwendet wird, unter Verwendung einer gemessenen Eingangsspannung des Abwärtswandlers und der Spannung, die durch eine Kopplung zwischen dem Schaltimpulsausgang einer Abwärtstreiberschaltung im Abwärtswandler und einem Bezugspotential gebildet wird.

## Revendications

1. Dispositif pilote pour fournir un courant à au moins un dispositif électroluminescent à semi-conducteur (205), comprenant :

- une alimentation à découpage de premier étage (103) connectée à un circuit de commande (105) configurée de façon à produire une tension sur la barre omnibus (Vbus),
- une alimentation à découpage de deuxième étage (104) configurée de façon à utiliser ladite tension sur la barre omnibus pour produire un courant de sortie pour ledit au moins un dispositif électroluminescent à semi-conducteur (205),

ledit dispositif pilote étant **caractérisé en ce qu'**il comprend :

- un agencement de réaction de tension (206) configuré de façon à transmettre un signal de réaction représentant ladite tension sur la barre omnibus (Vbus) audit circuit de commande (105) de ladite alimentation à découpage de premier étage (103), et
- un contrôleur (106) adapté de façon à mettre le dispositif pilote dans un mode de veille dans lequel ledit courant de sortie est essentiellement nul ;

ledit contrôleur (106) étant configuré de façon à changer, dans ledit mode de veille, la façon dont ledit signal de réaction représente ladite tension sur la barre omnibus (Vbus), pour abaisser la tension sur la barre omnibus produite par l'alimentation à découpage de premier étage (103).

2. Dispositif pilote selon la revendication 1, comprenant :

- un couplage entre ladite tension sur la barre omnibus et ledit agencement de réaction de tension (206) et
- un agencement régulateur de tension (207, 208) pour convertir ladite tension sur la barre omnibus en au moins une tension plus basse ;

ledit contrôleur (106) étant configuré de façon à mettre en oeuvre ledit changement de la façon dont ledit signal de réaction représente ladite tension sur la barre omnibus en changeant la conductivité d'un couplage (401) entre ledit agencement régulateur de tension (207, 208) et ledit agencement de réaction de tension (206).

3. Dispositif pilote selon la revendication 2, dans lequel :

- ledit agencement régulateur de tension (207, 208) comprend un premier régulateur de tension (207) pour convertir ladite tension sur la barre omnibus en une première tension plus basse qui est plus basse que ladite tension sur la barre omnibus,
- ledit agencement régulateur de tension (207, 208) comprend un deuxième régulateur de tension (208) pour convertir ladite première tension plus basse en une deuxième tension plus basse qui est plus basse que ladite première tension plus basse, et
- ledit contrôleur (106) est configuré de façon à mettre en oeuvre ledit changement de la façon dont le signal de réaction représente ladite tension sur la barre omnibus en changeant la conductivité d'un couplage (401) entre ladite deuxième tension plus basse et ledit agencement de réaction de tension (206).

4. Dispositif pilote selon la revendication 3, dans lequel au moins soit le premier (207), soit le deuxième (208) régulateur de tension est un régulateur linéaire.

5. Dispositif pilote selon la revendication 3 ou 4, dans lequel :

- ledit agencement de réaction de tension (206) comprend un optocoupleur (501) avec une photodiode qui a une anode et une cathode, avec un couplage entre ladite première tension plus basse et l'anode de ladite photodiode,
- ledit agencement de réaction de tension (206) comprend un régulateur shunt (502) couplé à la cathode de ladite photodiode,
- ledit agencement de réaction de tension (206) comprend un couplage de tension de référence de base (503, 504) entre ladite tension sur la barre omnibus et une entrée de commande dudit régulateur shunt (502), et
- ledit contrôleur (106) est configuré de façon à mettre en oeuvre ledit changement de la façon dont ledit signal de réaction représente ladite tension sur la barre omnibus en changeant la conductivité d'un couplage (401) entre ladite deuxième tension plus basse et ladite entrée de commande dudit régulateur shunt (502).

6. Dispositif pilote selon l'une quelconque des revendications 1 à 5, dans lequel :

- ladite alimentation à découpage de deuxième étage (104) est un convertisseur abaisseur de tension du type à commutateur sur le côté bas,
- ledit dispositif pilote comprend un couplage auxiliaire (606, 607, 608) entre un point (605) entre un noeud de sortie inférieur et un commutateur de courant (601) dudit convertisseur abaisseur de tension et un potentiel de référence, pour permettre une mesure de la tension audit point (605), et
- ledit contrôleur (106) est configuré, dans le mode de veille, de façon à diminuer la conductivité dudit couplage auxiliaire (608).

7. Dispositif pilote selon l'une quelconque des revendications 1 à 5, dans lequel :

- ladite alimentation à découpage de deuxième étage (104) est un convertisseur abaisseur de tension du type à commutateur sur le côté bas, avec un circuit d'attaque abaisseur de tension (603) ayant une sortie d'impulsions de commutation,
- le dispositif pilote comprend un couplage (806, 807) entre ladite sortie d'impulsions de commutation du circuit d'attaque abaisseur de tension (603) et un potentiel de référence,
- ledit contrôleur (106) est configuré de façon à mesurer une tension d'entrée dudit convertisseur abaisseur de tension du type à commutateur sur le côté bas, et une tension formée par ledit couplage (806, 807) entre la sortie d'impulsions de commutation du circuit d'attaque abaisseur de tension (603) et le potentiel de référence, et
- ledit contrôleur (106) est programmé de façon à calculer une indication d'une tension de sortie dudit convertisseur abaisseur de tension du type à commutateur sur le côté bas en utilisant la tension d'entrée mesurée et la tension formée par ledit couplage (806, 807) entre la sortie d'impulsions de commutation du circuit d'attaque abaisseur de tension (603) et le potentiel de référence.

8. Procédé pour utiliser le mode de veille dans un dispositif pilote de dispositifs électroluminescents à semi-conducteur comprenant :

- la production d'une tension sur la barre omnibus (Vbus),
- l'utilisation de ladite tension sur la barre omnibus pour produire un courant de sortie pour lesdits dispositifs électroluminescents à semi-conducteur,

ce procédé étant **caractérisé par** les étapes suivantes :

- la commande de la production de ladite tension sur la barre omnibus en se basant sur un signal de réaction représentant ladite tension sur la barre omnibus, et
- le changement (702), dans le mode de veille, de la façon dont ledit signal de réaction représente ladite tension sur la barre omnibus.

9. Procédé selon la revendication 8, dans lequel ledit changement (702) de la façon dont ledit signal de réaction représente ladite tension sur la barre omnibus comprend le changement de la conductivité d'un couplage entre un agencement régulateur de tension et la production dudit signal de réaction, ledit agencement régulateur de tension convertissant ladite tension sur la barre omnibus en au moins une tension plus basse.

10. Procédé selon la revendication 9, comprenant :

- la diminution (704) de la conductivité d'un couplage auxiliaire comme faisant partie de la mise du dispositif pilote dans le mode de veille, ledit couplage auxiliaire étant utilisé pour échantillonner la tension d'un noeud de sortie inférieur d'un convertisseur abaisseur de tension du type à commutateur sur le côté bas qui est utilisé comme étage de sortie du dispositif pilote.

11. Procédé selon l'une quelconque des revendications 8 à 9, comprenant :

- le calcul d'une indication d'une tension de sortie d'un convertisseur abaisseur de tension du type à commutateur sur le côté bas qui est utilisé comme étage de sortie du dispositif pilote en utilisant une tension d'entrée mesurée du convertisseur abaisseur de tension et la tension formée par un couplage entre la sortie d'impulsions de commutation d'un circuit d'attaque abaisseur de tension dans le convertisseur abaisseur de tension et un potentiel de référence.

AC IN

FILTER &
RECTIFIER
101

PFC
102

1ST STAGE
SMPS
103

Vbus

2ND STAGE
SMPS
104

DC OUT

1ST STAGE
CONTROL
105

2ND STAGE
CONTROL
106

Feedback

CTRL I/O

**Fig. 1**

103

Vbus

201

202

204

203

2ND STAGE
SMPS
104

205

0V

207

15 V
REG.

15V

VOLTAGE
FEEDBACK
206

3.3 V
REG.

3.3V

208

**Fig. 2**

Vbus

104

2ND STAGE
SMPS

205

0V

206
VOLTAGE
FEEDBACK

301
FEEDBACK
FUNCTION

106
2ND STAGE
CONTROL

**Fig. 3**

Vbus

104

2ND STAGE
SMPS

0V

207
15 V
REG.

15V

206
VOLTAGE
FEEDBACK

401

208
3.3 V
REG.

3.3V

STBY

2ND STAGE
CONTROL

106

**Fig. 4**

**Fig. 5**

**Fig. 6**

OTHER STATE — 701

STANDBY-COMMAND RECEIVED

CONNECT VOLTAGE MEASUREMENT — 707

RESUME NORMAL VOLTAGE FEEDBACK — 706

704 — CUT VOLTAGE MEASUREMENT

702 — CHANGE VOLTAGE FEEDBACK

(RESUME NORMAL MODE IN 1ST STAGE SMPS) — 708

705 — (TRIGGER BURST MODE IN 1ST STAGE SMPS)

RESUME-COMMAND RECEIVED

703 — STANDBY MODE

**Fig. 7**

19

**Fig. 8**

**Fig. 9**

**EP 3 043 624 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013014607 A
- US 20140346874 A1